# EUROPEAN PATENT APPLICATION

(11) **EP 4 371 699 A1**
(43) Date of publication of application: **22.05.2024**
(21) Application number: 23209512.5
(22) Date of filing: 13.11.2023
(51) Int. Cl.: B23Q 1/52, B23Q 1/62, B23Q 1/76, B23Q 7/00

(54) **SYSTEM FOR SUPPORTING AND MOVING SEMI-FINISHED PRODUCTS TO BE MACHINED**

(30) Priority: 16.11.2022 IT 202200023562
(71) Applicant: Mec. Carp. S.r.l., 31040 Trevignano (TV) (IT)
(72) Inventor: RIZZARDO, Andrea, 31040 Trevignano (TV) (IT)
(74) Representative: Grana, Daniele

(57) **Abstract**

The system (1) for supporting and moving semi-finished products to be machined comprises:
- a three-axis positioner (2) provided with:
- a load-bearing structure (3) for the support on the ground;
- means for securing and setting in rotation (4) a semi-finished product (S) to be machined which are associated movable with the load-bearing structure (3) and rotatable around an axis of rotation (R);

- an appliance (7) supporting the semi-finished product (S) associated with the positioner (2) and comprising:
- supporting means (8) adapted to support the semi-finished product (S) in rotation around the axis of rotation (R);
- first movement means (9) of the supporting means (8) moving close to/away from the positioner (2) along a first horizontal direction (D1); and
- second movement means (10) of the supporting means (8) lifting/lowering along a second vertical direction (D2).

## Description

### Technical Field

The present invention relates to a system for supporting and moving semi-finished products to be machined.

### Background Art

To cope with the need to perform machining on high tonnage semi-finished products, devices, known as "positioners", are widespread, specially engineered to hold and stably support the semi-finished products themselves.

In the present case, a particular type of positioners called, in the jargon, "three-axis positioner", consists of a load-bearing structure resting on the ground and of a fixing plate for fixing the semi-finished product associated with the load-bearing structure and movable, with respect to the latter, in vertical and horizontal shift as well as in rotation around a relevant axis of rotation.

Such positioners can profitably be used to lift and tilt the semi-finished products having even very high overall dimensions and tonnages, thus allowing them to be easily machined (e.g., simplifying the welding thereof), but they prove to be unsuitable in some specific operating cases, especially when the center of gravity of the semi-finished product attached to the fixing plate is too far from the latter. In this circumstance, in fact, the leverage that is created between the center of gravity of the load and the fixing plate results in the onset on the latter of significant bending stresses which make the positioner inefficient, if not unusable, for safely moving the semi-finished product.

This is what happens in the case of semi-finished products of elongated geometry, where the fixing of the latter on the positioner where there is one of their ends results in the center of gravity of the load being excessively far from the fixing plate and thus giving rise to considerable stresses on the positioner even at low tonnages.

In this case, the semi-finished product itself can also undergo significant bending, which eventually undermines the structural integrity thereof exposing it to damage and breakage at the point where there is the end to which it is fixed.

In order to overcome this problem and thus enable the effective machining of the semi-finished products of elongated conformation, the use is known of special supporting systems for supporting the same comprising a pair of positioners called "roller positioners".

Specifically, this specific type of positioners is provided with a load-bearing structure of elongated conformation and with a plurality of rollers associated with the load-bearing structure and shiftable in a longitudinal direction to the same.

The roller positioners are, therefore, placed at a distance from each other corresponding to that of the semi-finished product to be machined, which is then placed resting by weight on them where their ends are located and held there as a result of the tightening of the rollers against the ends themselves.

Thanks to this mode of support, the semi-finished product is in a stable balanced condition and can, therefore, be supported effectively by the roller positioners even if it has a considerable tonnage.

It should be pointed out, however, that this solution is not without its drawbacks either.

First of all, the mere fact of having to equip oneself with special positioners exclusively used for semi-finished products of elongated conformation represents a major source of additional expense that goes to the company's budget, severely burdening it.

In addition to this, it should be pointed out that the roller positioners do not allow the semi-finished products to be arranged at a height that ensures complete accessibility to the entire perimeter surface of the latter, thus complicating the reach of some of their areas, particularly those closer to the ground, by the personnel.

It is easy to appreciate how this fact goes to considerably hinder the performance of machining operations in the aforementioned areas, thus forcing workers to bend over, taking on uncomfortable, unphysiological positions, or to equip themselves with special lifting benches/footboards to be placed under the roller positioners, resulting in a further increase in total costs.

### Description of the Invention

The main aim of the present invention is to devise a system for supporting and moving semi-finished products to be machined which allows loads of any conformation to be held and moved efficiently and safely, that is, regardless of whether they have elongated conformation or not.

Within that main aim, one object of the present invention is to devise a system for supporting and moving semi-finished products to be machined which can be employed equally effectively with elongated semi-finished products having differently shaped cross sections.

Another object of the present invention is to devise a system for supporting and moving semi-finished products to be machined which allows the aforementioned drawbacks of the prior art to be overcome within the framework of a simple, rational, easy and effective to use as well as affordable solution.

The aforementioned objects are achieved by this system for supporting and moving semi-finished products to be machined having the characteristics of claim 1.

### Brief Description of the Drawings

Other characteristics and advantages of the present invention will become more apparent from the description of a preferred, but not exclusive, embodiment of a system for supporting and moving semi-finished products to be machined, illustrated by way of an indicative, yet non-limiting example, in the accompanying tables of drawings in which:
Figure 1 is an axonometric view of the system according to the invention in which a first embodiment of the supporting device is shown;
Figures 2 and 3 are axonometric views, from two different angles, of the system according to the invention in which a second embodiment of the supporting device is shown;
Figure 4 is an axonometric view of the system according to the invention in which an alternative embodiment of the movement means is shown.

### Embodiments of the Invention

With particular reference to these figures, reference numeral 1 globally denotes a system for supporting and moving semi-finished products to be machined.

The system 1 for supporting and moving semi-finished products to be machined comprises at least one three-axis positioner 2 provided with:
- at least one load-bearing structure 3 for the support on the ground;
- means for securing and setting in rotation 4 a semi-finished product S to be machined which are associated movable with the load-bearing structure 3 and rotatable around at least one axis of rotation R.

In the present case, the load-bearing structure 3 comprises at least one fixed portion 3a, arranged in direct contact with the ground, and at least one movable portion 3b associated with the fixed portion 3a in a movable manner and connected to the means for securing and setting in rotation 4.

In this regard, it is specified that the terms "fixed" and "movable" used to identify the above portions are to be meant as referring to a reference system locked together with the ground.

The movable portion 3b is, in particular, hinged to the fixed portion 3a where there is at least one first hinge 5 and rotates around the latter locked together with the means for securing and setting in rotation 4.

Specifically, the first hinge 5 has a substantially horizontal axis.

It should be noted, as of now, that the rotation of the movable portion 3b around the first hinge 5 results in the simultaneous movement of the means for securing and setting in rotation 4 along a horizontal axis and along a vertical axis.

In other words, the displacement vector associated with the means for securing and setting in rotation 4 has, where the rotation around the first hinge 5 takes place, a first component parallel to the ground and a second component orthogonal thereto.

Additionally, the means for securing and setting in rotation 4 are associated with the movable portion 3b by hinging where there is at least a second hinge 6.

In this case, the second hinge 6 has a horizontal and parallel axis to that of the first hinge 5.

In this way, the means for securing and setting in rotation 4 can be tilted with respect to the movable portion 3b, allowing even very different semi-finished products S to be fixed.

In this regard, the means for securing and setting in rotation 4 comprise at least one fixing plate 4a.

As visible in the figures, the fixing plate 4a has a substantially octagonal conformation.

Again, the means for securing and setting in rotation 4 comprise at least one motorized unit 4b connected to the fixing plate 4a and adapted to set the latter into rotation around the aforementioned axis of rotation R.

Specifically, in a reference configuration wherein the fixing plate 4a is orthogonal to the ground (straight plate), the axis of rotation R is substantially horizontal and, therefore, orthogonal to the axes of the first hinge 5 and of the second hinge 6.

According to the invention, the system 1 comprises at least one appliance 7 supporting the semi-finished product S associated with the positioner 2 and comprising:
- supporting means 8 adapted to support the semi-finished product S in rotation around the axis of rotation R;
- first movement means 9 of the supporting means 8 moving close to/away from the positioner 2 along a first horizontal direction D1; and
- second movement means 10 of the supporting means 8 lifting/lowering along a second vertical direction D2.

Before going into more detail about the appliance 7, it is worth pointing out that providing horizontally and vertically movable supporting means 8 of the semi-finished product turns out to be a rather convenient technical solution that makes it possible, particularly, to solve the problems of the state of the art previously complained of.

In fact, it is possible to use the supporting means 8 to support semi-finished products S having elongated conformation and, thus, prevent the same from bending stressing the fixing plate 4a, eventually damaging the structure thereof.

It is easy to appreciate, among other things, that such a solution also makes it possible to avoid the bending of the semi-finished product S and, therefore, to avert its dangerous stress, to the benefit of the structural integrity of the semi-finished product itself.

In this way, the system 1 is profitably employed to lift and rotate the semi-finished products S of even very different conformation and regardless of whether they have elongated geometry or not.

Coming back to describe the components of the appliance 7 it is important to explain that the same preferably comprises at least one rectilinear guide 11 extending along the first direction D1.

As visible in the figures, the rectilinear guide 11 substantially consists of a track. In this regard, the first movement means 9 comprise at least one movement body 12 associated with the rectilinear guide 11 in a shifting manner.

The movement body 12 is, more specifically, associated with the rectilinear guide 11 in a sliding manner.

In the present case, the movement body 12 is provided with wheels that allow it to slide on the rectilinear guide 11.

In this sense, the movement body 12 consists of a carriage sliding on the track.

The movement body 12 can be operatively associated with a suitable motorized unit that allows the movement thereof along the first direction D 1.

Alternatively, the movement body 12 can be idle and be, therefore, dragged by shifting along the first direction D1 as a result of the displacement of the positioner 2.

As for, on the other hand, the second movement means 10, they comprise at least one vertical movement mechanism 13 associated with the movement body 12 in integral shift along the first direction D1 and on which the supporting means 8 are arranged in support.

In detail, the movement mechanism 13 is positioned between the movement body 12 and the supporting means 8.

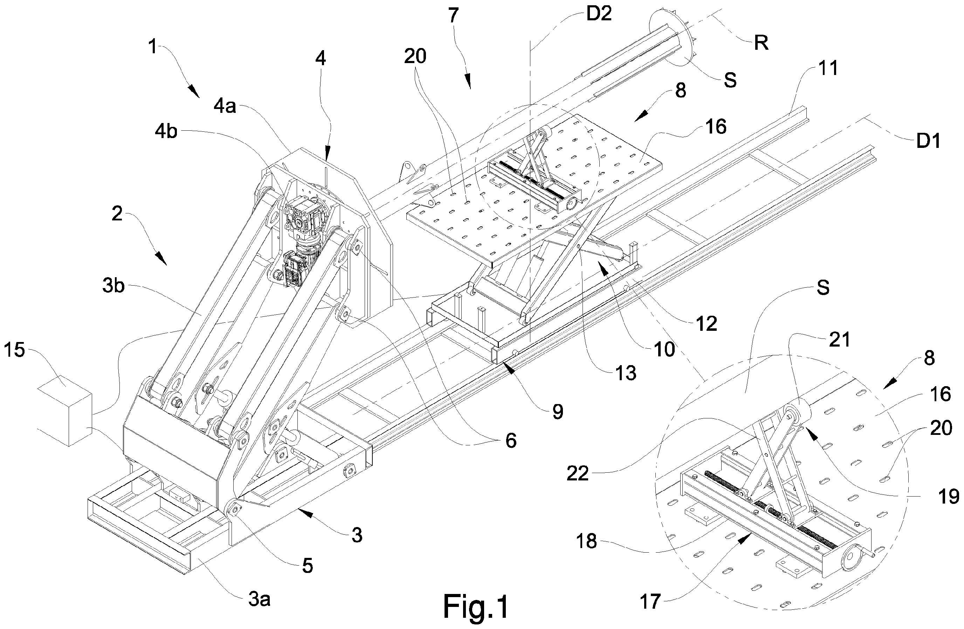

As seen in Figures 1 to 3, the movement mechanism 13 is of the type of a movable mechanism between an extended configuration and a retracted configuration.

In this sense, the switch of the movement mechanism 13 from the retracted configuration to the extended configuration results in the lifting of the supporting means 8 while, conversely, the switch from the extended configuration to the retracted configuration results in the lowering of the latter.

In this case, the movement mechanism 13 is of the type of a so-called "pantograph" mechanism.

It is easy to appreciate, however, that the movement mechanism 13 may vary from the preferred version just given and may, e.g., be of the type of a scissor mechanism or of some other mechanism still known to the expert in the field that would, in any case, allow the supporting means 8 to be moved smoothly and efficiently along the second direction D2.

It should be emphasized that the movement means 9, 10 shown so far are quite advantageous in operational cases where work has to be carried out on the end of the semi-finished product S opposite the positioner 2 since they allow the personnel complete and easy accessibility of the latter.

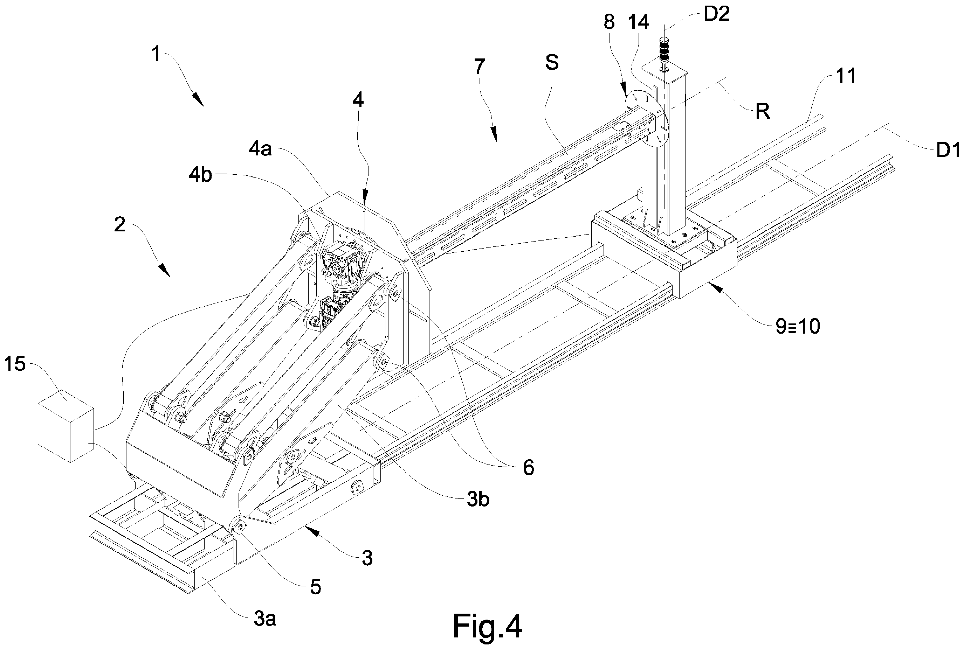

Alternatively, in a different embodiment of the movement means 9, 10 shown in Figure 4, these consist of a lifting post.

In this case, in particular, the lifting post comprises a sliding base associated with the rectilinear guide 11 in a shiftable manner.

Again, the lifting post comprises a sliding member (not visible in the figures) associated shiftable with an adequate slideway 14 formed vertically along the lifting post.

In addition, the lifting post is provided with a fastening tool 8 of the semi-finished product S locked together with the sliding member.

The fastening tool 8 is particularly rotatable around a respective axis parallel to the axis of rotation R.

In this case, the fastening tool 8 coincides with the supporting means 8.

The embodiment of the movement means 9, 10 just given is particularly convenient for supporting the semi-finished products S at their ends, i.e., fixing one of the latter to the fixing plate 4a of the positioner 2 and the other to the fastening tool 8 (i.e., to the supporting means 8) of the lifting post.

This solution is, therefore, advantageous in operational cases where it is necessary to work on the lateral surface of the semi-finished product S since it allows the personnel complete reachability of the latter.

It appears, therefore, clear that the system 1 proves to be very versatile in its use, allowing for easier and more efficient machining operations both at the end (first embodiment of the movement means 9, 10) and at the lateral surface (second embodiment of the movement means 9, 10) of the semi-finished product S.

The system 1 preferably comprises at least one electronic unit 15 which is operatively connected to the positioner 2 and to the movement means 9, 10 and is configured to detect the position of the means for securing and setting in rotation 4 and to control, depending thereon, the displacement of the first movement means 9 along the first direction D1 and of the second movement means 10 along the second direction D2.

Specifically, the electronic unit 15 measures the rotation of the movable portion 3b around the first hinge 5, calculates the horizontal and vertical displacement made by the fixing plate 4a as a result of these rotations, and drives, as a result of this calculation, the movement means 9, 10 so as to displace the supporting means 8 by corresponding amounts.

In this sense, as a result of any departure of the fixing plate 4a from the supporting means 8 due to the rotation in a first way around the first hinge 5, the electronic unit 15 gives the movement means 9, 10 the command to bring the supporting means 8 closer to the positioner 2 along the first direction D1 and, at the same time, to increase the height thereof along the second direction D2.

In fact, as already explained, the rotation around the first hinge 5 results in a simultaneous horizontal and vertical displacement of the fixing plate 4a, which therefore requires corresponding offset by the movement means 9, 10.

In fact, in this way, it can be ensured that the supporting means 8 remain correctly positioned with respect to the semi-finished product S even after the position of the fixing plate 4a changes.

Similarly, after any movement of the fixing plate 4b close to the supporting means 8 due to the rotation around the first hinge 5 in a second, opposite way to the previous one, the electronic unit 15 gives the movement means 9, 10 the command to move the supporting means 8 away from the positioner 2 along the first direction D1 and, at the same time, to reduce the height thereof along the second direction D2.

After describing the operation of the electronic unit 15, the possibility cannot, however, be ruled out that the same can be configured to drive the movement means 9, 10 also as a result of any rotation of the fixing plate 4a around the second hinge 6.

With reference to the embodiment shown in Figures 1 to 3, the supporting means 8 comprise:
- at least one platform 16 locked together with the second movement means 10; and
- at least one supporting device 17 provided with at least one base body 18 arranged resting on the platform 16 and with at least one revolving support 19 associated the said base body 18 and adapted, in use, to support the semi-finished product S in a rotatable manner.

Conveniently, the supporting means 8 comprise fastening means 20 associated with the platform 16 and adapted to allow the fastening of the supporting device 17 onto the platform 16.

Preferably, the fastening means 20 comprise a plurality of fastening holes cut in the platform 16 and a corresponding plurality of fastening elements, not shown in the figures, engageable with the fastening holes to secure the supporting device 17 in place on the platform 16.

Going into more detail, the revolving support 19 comprises a plurality of roller elements 21.

In accordance with a first embodiment of the supporting device 17 shown in Figure 1, the roller elements 21 are arranged, in use, in direct contact with the semi-finished product S.

In this case, the base body 18 is at least partly hollow.

Again, in this case, the supporting device 17 comprises at least one opening/closing mechanism 22 positioned between the base body 18 and the roller elements 21 and movable between an opening configuration, wherein it allows pop-up extraction of the roller elements 21 from the base body 18, and a closing configuration, wherein it arranges the roller elements 21 concealed within the base body 18.

For example, the opening/closing mechanism 22 is of the type of a pantograph mechanism.

In addition, the roller elements 21 have a geometric axis parallel to the axis of rotation R, that is, they rotate around axes parallel to the axis of rotation R.

This first embodiment proves to be particularly advantageous in the case of semi-finished products S of cylindrical conformation thanks to the pure rolling condition that is established between the lateral surface of the semi-finished products S and the roller elements 21 and, therefore, to the low frictions connected thereto.

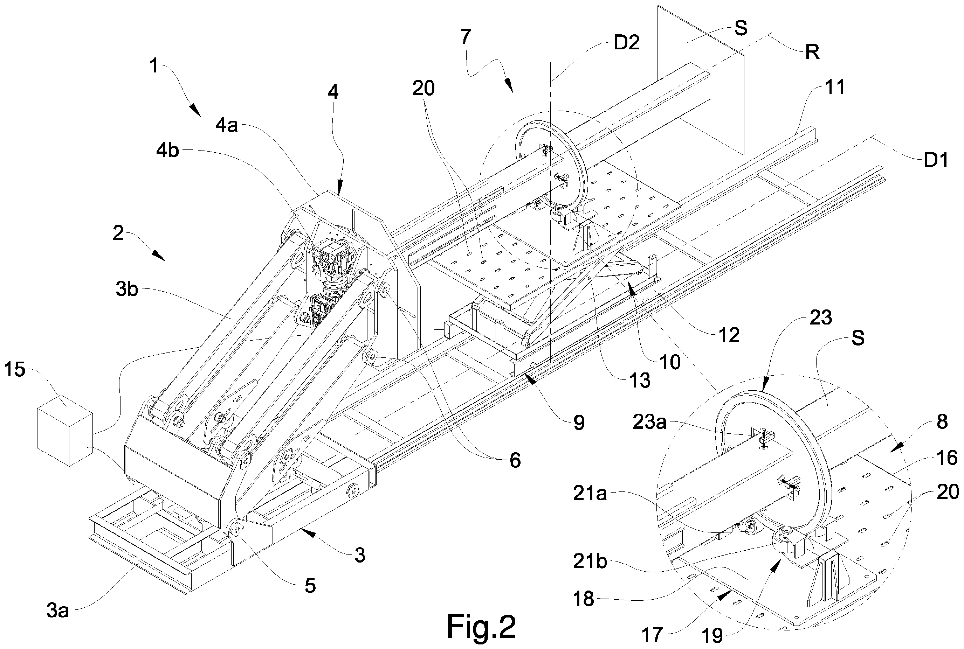

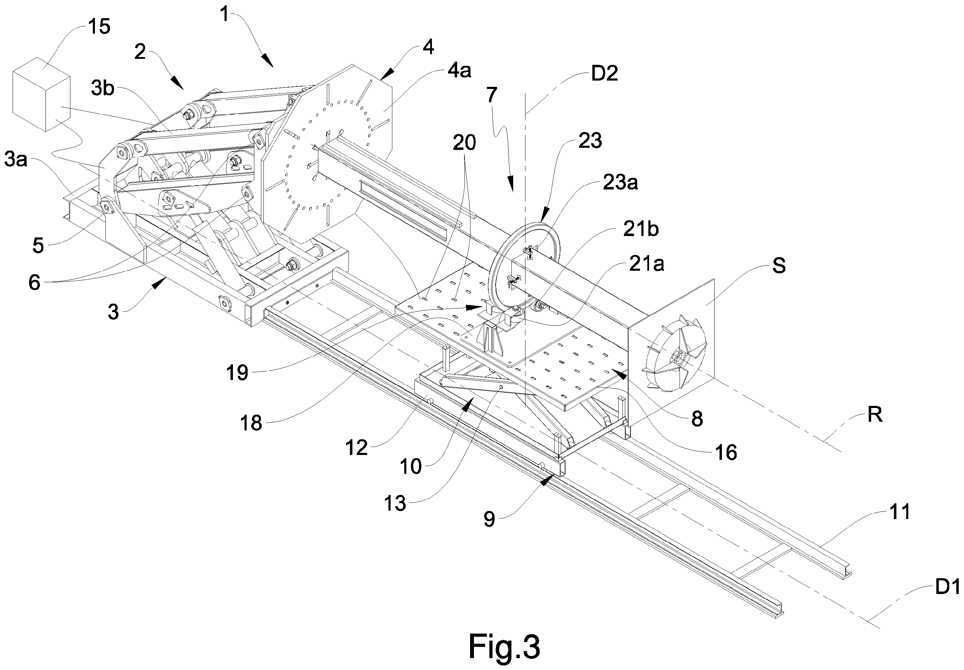

In accordance with a second embodiment of the supporting device 17 shown in the Figures 2 and 3, the revolving support 19 comprises at least one adapter body 23 associated in rotation with the roller elements 21 and defining at least one cavity 23a within it through which the semi-finished product S may pass through. Specifically, the adapter body 23 is positioned, in use, between the semi-finished product S and the roller elements 21.

In this case, first roller elements 21a with a geometric axis parallel to the axis of rotation R and second roller elements 21b having a geometric axis orthogonal to the axis of rotation R are provided, the adapter body 23 being placed in contact simultaneously with the first roller elements 21a and with the second roller elements 21b.

Conveniently, the adapter body 23 has a substantially disc-shaped conformation. In this way it is possible to define a pure rolling condition between the adapter body 23 and the roller elements 21 similar to that previously described for the first embodiment.

Advantageously, the cavity 23a has a substantially polygonal conformation.

This expedient is particularly convenient to enable the system 1 to effectively support the elongated semi-finished products S in rotation which are provided with a polygonal and not, therefore, circular cross section.

With particular reference to Figure 2 and Figure 3, the cavity 23a has a substantially square conformation and thus allows the support of square cross-section semi-finished products S of the bar type.

It is immediate to appreciate, however, that the cavity 23a may have different conformation and be, e.g., rectangular, rhomboidal, trapezoidal, hexagonal and so on.

According to a further aspect of the invention, the present invention also relates to an appliance 7 for supporting the semi-finished products to be machined which is associable with a three-axis positioner 2.

Specifically, the appliance 7 comprises:
- supporting means 8 adapted to support a semi-finished product S in rotation around at least one axis of rotation R;
- first movement means 9 of the supporting means 8 close to/away from the positioner 2 along a first horizontal direction D1; and
- second movement means 10 of the supporting means 8 lifting/lowering along a second vertical direction D2.

In particular, the supporting means 8 comprise at least one platform 16 associated with the movement means 9, 10 and at least one supporting device 17 provided with at least one base body 18 arranged resting on the platform 16 and at least one revolving support 19 associated with the base body 18 and adapted, in use, to support the semi-finished product S in a revolving manner.

It is specified, in this regard, that the concerned appliance 7 is preferably provided with the various components previously set out in the context of the system 1 and to whose detailed description reference is made.

It is therefore easy to appreciate that the appliance 7 can be successfully employed, in combination with a three-axis positioner 2, to support in rotation the semi-finished products S provided with elongated conformation.

What is more, the same appliance 7 allows supporting in rotation the semi-finished products S having different cross sections, e.g. circular or polygonal, and is, therefore, very versatile in its use.

It has in practice been ascertained that the described invention achieves the intended objects.

In particular, the fact is emphasized that the special expedient of providing horizontally and vertically movable supporting means of the semi-finished product makes it possible to profitably support in rotation the semi-finished products of elongated conformation, thus making the system according to the invention perfectly employable to support the semi-finished products regardless of their geometry.

In this regard, the special expedient of providing an adapter element allows the system to be profitably used with elongated semi-finished products provided with different cross sections.

Finally, the special expedient of providing supporting means allows for easy machining (e.g. welding) of the elongated semi-finished products where there is the end opposite the positioner, which benefits the overall versatility of use of the system according to the invention.

## Claims

1. System (1) for supporting and moving semi-finished products to be machined, comprising at least one three-axis positioner (2) provided with:
- at least one load-bearing structure (3) for the support on the ground;
- means for securing and setting in rotation (4) a semi-finished product (S) to be machined which are associated movable with said load-bearing structure (3) and rotatable around at least one axis of rotation (R);
**characterized by** the fact that it comprises at least one appliance (7) supporting said semi-finished product (S) associated with said positioner (2) and comprising:
- supporting means (8) adapted to support said semi-finished product (S) in rotation around said axis of rotation (R);
- first movement means (9) of said supporting means (8) moving close to/away from said positioner (2) along a first horizontal direction (D1); and
- second movement means (10) of said supporting means (8) lifting/lowering along a second vertical direction (D2).

2. System (1) according to claim 1, **characterized by** the fact said appliance (7) comprises at least one rectilinear guide (11) extending along said first direction (D1) and by the fact said first movement means (9) comprise at least one movement body (12) associated with said rectilinear guide (11) in a shifting manner.

3. System (1) according to claim 2, **characterized by** the fact said second movement means (10) comprise at least one vertical movement mechanism (13) associated with said movement body (12) in integral shift along said first direction (D1) and on which said supporting means (8) are arranged in support.

4. System (1) according to claim 2, **characterized by** the fact that said movement means (9, 10) consist of a lifting post.

5. System (1) according to one or more of the preceding claims, **characterized by** the fact it comprises at least one electronic unit (15) which is operatively connected to said positioner (2) and to said movement means (9, 10) and is configured to detect the position of said means for securing and setting in rotation (4) and to control, depending thereon, the displacement of said first movement means (9) along said first direction (D1) and of said second movement means (10) along said second direction (D2).

6. System (1) according to one or more of the preceding claims, **characterized by** the fact that said supporting means (8) comprise:
- at least one platform (16) locked together with said second movement means (10); and
- at least one supporting device (17) provided with at least one base body (18) arranged resting on said platform (16) and with at least one revolving support (19) associated with said base body (18) and adapted, in use, to support said semi-finished product (S) in a rotatable manner.

7. System (1) according to one or more of the preceding claims, **characterized by** the fact that said supporting means (8) comprise fastening means (20) associated with said platform (16) and adapted to allow the fastening of said supporting device (17) onto said platform (16).

8. System (1) according to claim 6 or 7, **characterized by** the fact that said revolving support (19) comprises a plurality of roller elements (21).

9. System (1) according to claim 8, **characterized by** the fact that said roller elements (21) are arranged, in use, in direct contact with said semi-finished product (S).

10. System (1) according to claim 8, **characterized by** the fact said revolving support (19) comprises at least one adapter body (23) associated in rotation with said roller elements (21) and defining within it at least one cavity (23a) through which said semi-finished product (S) may pass, said adapter body (23) being positioned, in use, between said semi-finished product (S) and said roller elements (21).

11. System (1) according to claim 10, **characterized by** the fact that said adapter body (23) has a substantially disc-shaped conformation.

12. System (1) according to claim 10 or 11, **characterized by** the fact that said cavity (23a) has a substantially polygonal conformation.

13. System (1) according to claim 12, **characterized by** the fact that said cavity (23a) has a substantially square conformation.

14. Appliance (7) for supporting semi-finished products to be machined associable with a three-axis positioner (2) and comprising:
- supporting means (8) adapted to support a semi-finished product (S) in rotation around at least one axis of rotation (R);
- first movement means (9) of said supporting means (8) close to/away from said positioner (2) along a first horizontal direction (D1); and
- second movement means (10) of said supporting means (8) lifting/lowering along a second vertical direction (D2);
wherein said supporting means (8) comprise at least one platform (16) associated with said movement means (9, 10) and at least one supporting device (17) provided with at least one base body (18) arranged resting onto said platform (16) and at least one revolving support (19) associated with said base body (18) and adapted, in use, to support said semi-finished product (S) in a revolving manner.
